# EUROPEAN PATENT APPLICATION

(11) **EP 2 682 719 A1**
(43) Date of publication of application: **08.01.2014**
(21) Application number: 12175070.7
(22) Date of filing: 05.07.2012
(51) Int. Cl.: G01F 1/66, G01F 15/14

(54) **Flow meter with unbroken liner**

(71) Applicant: KAMSTRUP A/S, 8660 Skanderborg (DK)
(72) Inventor: Laursen, Peter Schmidt, 8660 Skanderborg (DK)
(74) Representative: Plougmann & Vingtoft A/S

(57) **Abstract**

The present invention relates to an ultrasonic flow meter (1) with an unbroken liner (6) inside the flow tube. The flow tube (2) has at least one through-going opening (5) in the wall. The unbroken liner (6) is provided in a water-tight material and arranged in the flow tube to cover the entire inner surface of the flow tube. The piezoelectric transducers (11, 12) are arranged at an outside of the liner in the at least one through-going opening (5) in the wall of the flow tube, so that ultrasonic signals are transmitted through the liner wall to enter the flow tube.

## Description

### FIELD OF THE INVENTION

The present invention relates to an ultrasonic flow meter, and in particular to an ultrasonic flow meter comprising a liner inside the flow tube.

### BACKGROUND OF THE INVENTION

In an ultrasonic flow meter, ultrasonic transducers are mounted to a flow channel in a way so that ultrasonic signals can be introduced into the flow channel and travel along a measuring section to be detected after the passage. The operation of the ultrasonic transducers is controlled by an electronic circuit, electrically connected to the transducers.

Different types of ultrasonic flow meters exist. In one type, the flow channel is provided by a flow tube in the form of a metal housing, typically made by a form of brass. A metal flow tube has the advantage that it is strong and water-tight, but it is relatively expensive to produce. In order to introduce ultrasonic signals into a metal flow tube, transducer inserts are mounted in openings of the wall of the flow tube. The openings in the flow tube are normally sealed by rubber seals in the form of O-rings provided between the transducer insert and the flow tube.

In another type of ultrasonic flow meters, the flow channel is provided by a flow tube in the form of a polymer housing, a polymer housing may be produced relatively in-expensively. Ultrasonic signals may be transmitted through the wall of the polymer flow tube and thereby avoid a sealing of the flow tube. However special polymer materials should be used in order to ensure that the housing is sufficiently strong and sufficiently water-tight. Strong polymer materials are normally not completely watertight and somewhat brittle.

### SUMMARY OF THE INVENTION

It would be advantageous to provide a flow meter which in a simple manner achieves being sufficiently strong and sufficiently water-tight in an in-expensive manner. In general it is an object of the present invention to provide an alternative to known flow meters, which can be fabricated in a cost-efficient manner.

In accordance with a first aspect of the invention, there is provided an ultrasonic flow meter which comprises:
- a flow tube with a through-going opening for passage of a fluid between an inlet and an outlet, and at least one through-going opening in a wall of the flow tube;
- an unbroken liner arranged in the flow tube to cover the entire inner surface of the flow tube, the liner being provided in a water-tight material;
- two or more piezoelectric transducers; and
- control circuit arranged for operating the two or more piezoelectric transducers and to generate a signal or value indicative of the flow rate of the fluid;
wherein the piezoelectric transducers are arranged at an outside of the liner in the at least one through-going opening in the wall of the flow tube, so that ultrasonic signals are transmitted through the liner wall.

The flow meter of the present invention has a two-part flow housing, a first part being the flow tube and a second part being the liner. In this manner, the flow tube may be provided in a material which is robust and sufficiently strong to provide an outer housing, and the liner may be provided in a water-tight material to avoid any sealing surfaces in relation to the ultrasonic transducers.

In an important embodiment, the flow tube is provided in stainless steel tube whereas the liner is provided in a PEX-tube. Stainless tubes and PEX tubes are both widely used for water installation and mass fabricated. An ultrasonic flow meter may thereby be provided where the housing is based on standard general purpose components. Other important embodiments are disclosed in connection with description of the embodiments.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates an embodiment of an ultrasonic flow meter with an unbroken liner in the flow passage;
Fig. 2 illustrates a flow meter installed in a pipe installation;
Figs. 3A to 3C illustrate embodiments of geometric configurations of the liner with respect to a disc shaped piezo electric transducer;
Fig. 4 illustrates a flow meter where the shaped of the liner is such that the plane of the transducers are tilted with respect to a centre axis of the flow tube; and
Fig. 5 illustrates an embodiment where the liner is monolithically formed with a house.

### DESCRIPTION OF EMBODIMENTS

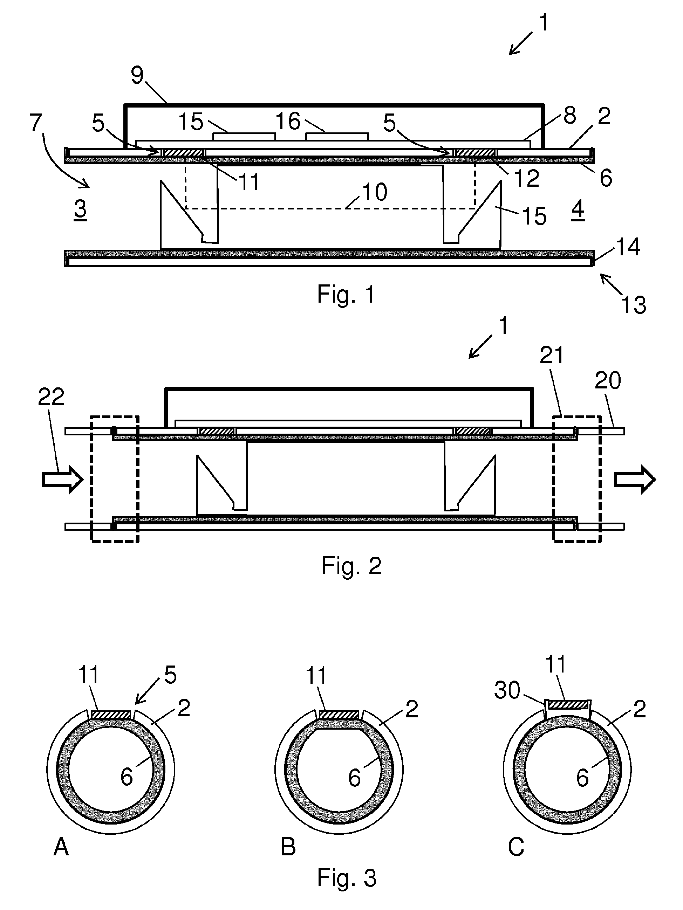

Figure 1 illustrates an embodiment of an ultrasonic flow meter in accordance with the present invention.

The flow meter 1 comprises a flow tube 2 with a through-going opening for passage of a fluid between an inlet 3 and an outlet 4. The through-going opening is also referred to as a flow passage 7. The flow tube 2 further comprises two through-going openings 5 in a wall of the flow tube, with two piezoelectric transducers 11, 12 arranged in these wall openings. A control circuit 8 in the form of a printed circuit board (PCB) is arranged for operating the two or more piezoelectric transducers and to generate a signal or value indicative of the flow rate of the fluid. In the illustrated embodiment, the transducers are in direct contact with the PCB, however the transducers may also be supported by holders and connected to the control circuit by means of electrical conductors.

A liner 6, in the form of an unbroken liner, is arranged in the flow tube to cover the entire inner surface of the flow tube. The liner is provided in a water-tight material so that any fluid flowing in the in the flow tube will not leak through the transducer openings 5 in the flow tube 2.

The flow meter housing thus comprises two parts, a flow tube 2 and a liner 6. The flow tube is provided with holes in the wall arranged for receiving transducer, whereas the liner is unbroken with the piezoelectric transducers arranged at an outside of the liner in the area defined by the wall openings of the flow tube, so that ultrasonic signals are transmitted through the liner wall to enter and exit the flow tube. To ensure a proper transmission of the ultrasonic signal through the liner wall, the wall thickness at least in the coupling area, i.e. the wall area through which ultrasonic signals are coupled, may be adapted in accordance with the so-called matching layer principle where the thickness of the wall is adjusted to a proper thickness to ensure proper transmission of the emitted ultrasonic wave of the ultrasonic transducer through the wall and into the flow channel, possibly under the constraint that the area should have thickness which ensures a sufficient strength. The thickness of the wall may be matched to the acoustic wavelength of the emitted ultrasonic wave of the transducer.

In general only a single, or more than two, wall opening(s) may be used for accommodating the transducers in the wall of flow tube. Moreover, holder elements may be used in connection with arranging the transducers in the wall openings of the flow tube.

The overall principles of an ultrasonic flow meter in relation to embodiments of the present invention are disclosed in connection with the embodiment of an ultrasonic flow meter as illustrated in Fig 1.

The ultrasonic flow meter 1 is a transit time flow meter arranged to measure a flow rate of a fluid flowing in the flow passage 7 by use of the known operation principle for transit time flow meters, where ultrasonic signals 10 are emitted at one transducer 11 and received at the other transducer 12, and where the difference in time-of-arrival between oppositely propagating signals is measured and converted into a flow rate. The piezoelectric transducers are operated by the control circuit 8, which based on the involved signals generate a signal or value indicative of the flow rate of the fluid. The level of signal treatment of the control circuit may vary from basic signal treatment, where processed signals are output to a further electronic unit for further signal processing, to a complete signal treatment resulting in the determination of the flow rate. Such further electronic unit may be part of the flow meter unit 1, or may be part of a separate calculator circuit (not shown) communicatively connected to the flow meter.

Fig. 1 further illustrates a display 15 for displaying information relating to the consumed amount of fluid, a radio unit 16 for wireless remote reading of the meter, and a cover 9 for encapsulating the flow electronics to form an assembled flow meter. Further elements may also be present, such as one or more batteries for supplying power to electronics, temperature sensors for measuring the temperature of the flowing fluid, etc. The cover 9 may be any type of house or compartment suitable for housing the elements of the flow meter. Here the cover is illustrated as a single element, but in general it may be made of more elements, such as a cup or wall part and a lid. The cover may be attached to the flow tube by means of clamps, or any suitable means.

The flow meter housing thus comprises two parts, a flow tube 2 and a liner 6. The flow tube is provided in a relatively strong and stiff material, so that the flow meter can withstand mount in a pipe line installation, such as a pipe line installation for water, district heat or district cooling; whereas the liner may, but need not be, provided in a soft material. An important aspect of the liner is that it is water-tight. Many suitable water-tight materials suitable for use in a water, district heat or district cooling pipe line installation are polymeric.

The term water-tight is to be understood broadly, and refers to a situation where virtually no water penetrates through the liner. In practical, zero moisture penetration may not be possible. The term water-tight may refer to materials which is able comply with the standardized Ingress Protection (IP) classes of at least class IP65, but preferably higher classification such as IP66, IP67 or even IP68 which is the highest IP class.

The material of the flow tube is selected from, but not limited to, the group consisting of: stainless steel, galvanized steel, brass, red brass, polyphenylene sulphide (PPS), polyether sulphone (PES), polyether sulphone (PSU), polystyrene (PS) compound, or polyamide (PA), in particular polyamide 12 (PA12).

Moreover, the material of the flow tube may be composite material based on one of the mentioned polymers and another type of material, e.g. carbon, metal powder, glass or the like, to adjust the properties of the polymer.

While relatively strong polymeric materials may be used for the flow tube, in important embodiments the flow tube is provided in a metal.

The material of the liner is selected from, but not limited to, the group consisting of: cross-linked polyethylene (PEX), polyvinyl chloride (PVC), chlorinated polyvinyl chloride (CPVC), polyphenylene sulphide (PPS), polyether sulphone (PES), polyether sulphone (PSU), polystyrene (PS) compound, polyamide (PA), in particular polyamide 12 (PA 12) or rubber.

While the same material may be used for the flow tube and the liner, this is not envisioned to be the case for the same flow meter. In general two different materials are used for a given flow meter, and generally the materials are selected so that the stiffness of the flow tube is higher than the stiffness of the liner. As a measure of the stiffness Young's modulus may be used, or other suitable measures as are generally known in the art.

In an embodiment, the flow tube comprises a sealing surface 13 being the end surface of the flow tube for sealed connection to a pipe installation. Advantageously, the liner 6 is extended onto the sealing surface to provide a sealing means 14. In this embodiment, the liner ensure that fluid is not leaked neither through the transducer openings 5 in the wall of the flow tubes, nor through the connection area to a pipe installation. Thus the liner is a single sealing means for sealing off the flow tube.

Fig. 2 schematically illustrates the flow meter 1 installed in a pipe installation 20. The flow meter is installed in the pipe line in a sealed manner by use of the sealing part 14 of the liner. The sealing part 14 is squeezed in between the end section of the flow meter and the end section of the pipe installation. These end sections may be shaped to provide suitable sealing surfaces. The flow meter is attached to the pipe installation be means of a connection means 21, such as a union nut or other suitable means. In this manner, the flow passage becomes part of the pipe line for supplying a flowing fluid 22 to a consumer.

In general embodiments, the ultrasonic flow meter may be or may be part of a charging consumption meter, e.g. a water meter, gas meter, heat meter, cooling meter, or energy meter, where the consumption meter is arranged for measuring consumption data of a supplied utility used as a basis for billing. The consumption meter may be used in connection with district heating or district cooling. The consumption meter may be a legal meter, i.e. a meter which is subdued to regulatory demands. Such regulatory demands may be demands to the precision of the measurements.

Figs. 3A to 3C illustrate different embodiments of geometric configurations of the liner with respect to a disc shaped piezo electric transducer.

In important embodiments, the piezoelectric transducers are monolithic piezoelectric transducers of a ceramic material, such as lead zirconate titanate (PZT) based transducers. Such transducers are disc or cylinder shaped, thus comprises two opposite parallel flat surfaces.
Fig. 3A illustrates an embodiment where the liner is flat in a contact area with the piezoelectric transducers, so that a front surface of the piezoelectric transducer and the outer surface of the liner are plane parallel in the contact area.
Fig. 3B illustrates an embodiment where also the inner surface of the liner is flat in an area covering contact area with the piezoelectric transducers, so that a front surface of the piezoelectric transducer and the inner surface of the liner are plane parallel in the area covering the contact area.
Fig. 3C illustrates an embodiment wherein the flat surface of the transducer is adapted to the curved outer surface of the liner by means of an adaptor piece 30 provided in the area between the outer surface of the liner and the outer surface of the piezoelectric transducer.

In a not shown embodiment, the inner surface of the liner is flat, as in Fig. 2B, whereas the outer surface of the liner is curved. In such a situation, an adaptor piece may also be used to match the flat transducer to the curved liner. The manufacturing of such surfaces are discloses below in connection with the disclosure relating to embodiments of fabricating a flow meter.

In Fig. 1, the flow meter comprises a flow insert 15 comprising two or more reflectors for directed an ultrasonic signal from an emitting piezoelectric transducer to a receiving piezoelectric transducer in a manner so that the ultrasonic signal propagates parallel with the direction of the flow tube, that is parallel with the centre axis of the flow tube. The shown insert 15 comprises reflectors for directing the signal, as well as a centre piece in the form of a flow reducer. A flow insert is used in embodiments where the transducers are placed in the same plane in manner so that the centre axis of the flow tube, the plane of the mounting area of the transducers, and the plane of the PCB of the control circuit 8 all are parallel. In such a situation, the piezoelectric transducers emit ultrasound perpendicular to the flow tube and reflectors are needed to direct the ultrasonic signal along the flow passage. Other types of flow inserts may also be used.

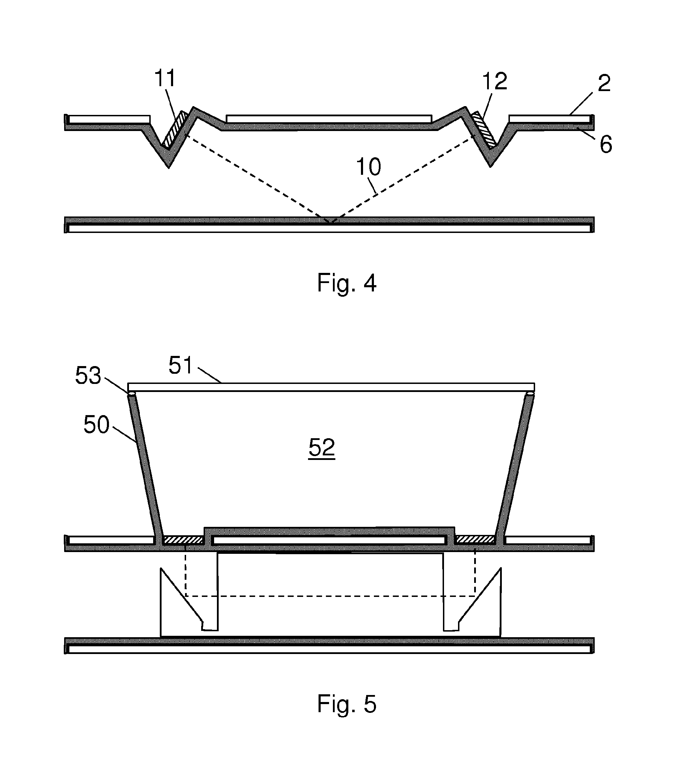

Fig. 4 illustrates an embodiment where the shaped of the liner is such that the plane of the transducers are tilted with respect to a centre axis of the flow tube. In this situation, the two transducers partly oppose each other, and the ultrasonic signal may be reflected by an inside of the flow tube so that a signal emitted at one transducer arrives at the other transducer. This naturally requires that the material of the flow tube is selected so that ultrasound is reflected. Fig. 4 illustrates a situation where the signal is reflected a single time to travel along a "V", however other configurations can be envisioned, e.g. where the signal is reflected three times to travel along a "W".

Fig. 5 illustrates an embodiment where the liner is monolithically formed with a house (or cup) for housing the control circuit for operating the two or more piezoelectric transducers, as well as the transducers, and possible other elements, such as display, battery, etc. The liner and the cup may be formed by injection moulding, as will be discussed below in further detail.

Fig. 5 further illustrates a cover 51 and a seal 53, e.g. a rubber seal, such as an O-ring, to form a sealed cavity 52 for housing electronic elements to operate the flow meter. The flow meter may further comprise an attachment means (not shown) for attaching the cover firmly to the cup. Such attachment means may be a lock ring. This embodiment provides a flow meter where the electronic elements are comprised within a cavity or compartment of a house which only has a single sealing surface towards the exterior. The sealing towards the flow tube is done by the unbroken liner. Thus only a single sealing element (the O-ring) is used to seal between the rim of the cavity and the cover.

Embodiments of the present invention may be fabricated by performing the following general steps:
- providing a flow tube with a through-going opening for passage of a fluid between an inlet and an outlet, and at least one through-going opening in a wall of the flow tube;
- proving an unbroken liner in the flow tube to cover the entire inner surface of the flow tube, the liner being provided in a water-tight material;
- arranging two or more piezoelectric transducers; and
- arranging a control circuit for operating the two or more piezoelectric transducers and to generate a signal or value indicative of the flow rate of the fluid;
wherein the piezoelectric transducers are arranged at an outside of the liner in the at least one through-going opening in the wall of the flow tube, so that ultrasonic signals are transmitted through the liner wall.

In an embodiment, the flow tube is provided as a galvanized steel tube, provided with holes for receiving the transducers and threaded ends for connection to a pipe installation. Such tubes are mass fabricated, and the only modification is the provision of holes and threads.

A soft liner is provided, e.g. in the form of a PEX tuber and inserted into the flow tube through either the inlet or the outlet of the tube.

The liner shape may after insertion be modified by a heater tool, which heats the liner in a desired area to soften it and emboss a desired shape.

In this manner may the sealing means 14 be formed by using a slightly longer liner than flow tube, and by means of the heater tool, heat the end of the liner to render it soft, and bend it against the ends while the material is soft.

In the same manner may the flat areas for the transducer, as illustrated in Fig. 3A and 3B, be provided by using a heating tool to modify the shape of the liner after it has been inserted. The heater tool may heat the area to be modified, and while the area is soft due to the presence of the heat, press the area with a suitable shaped surfaces so that the liner is pressed into the desired shape in the area of the transducers. The amount of heat needed, as well as the size of the embossing force is selected in accordance with the polymer material used.

In another embodiment, the liner is provided by injection moulding it directly onto the flow tube. This may be done by inserting a core element into the through-going opening for passage of a fluid of the flow tube; and injection moulding the liner in the space between the core element and the flow tube.

The embodiment of Fig. 5 may be provided in the injection moulding process where in addition to the core element inserted into the flow tube, the core also comprises one or more elements for defining the house structure. In this manner a complete flow meter may be injection moulded which comprises a flow tube in a first material, and a liner and house for the electronics in a second material. In general may different materials for the liner and the house for the electronics be used, by first injection moulding the liner, change moulding material, and then injection moulding the house, or vice versa.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

## Claims

1. An ultrasonic flow meter (1) arranged to measure a flow rate of a fluid, the flow meter comprising:
- a flow tube (2) with a through-going opening for passage of a fluid between an inlet (3) and an outlet (4), and at least one through-going opening (5) in a wall of the flow tube;
- an unbroken liner (6) arranged in the flow tube to cover the entire inner surface of the flow tube, the liner being provided in a water-tight material;
- two or more piezoelectric transducers (11, 12); and
- control circuit (8) arranged for operating the two or more piezoelectric transducers and to generate a signal or value indicative of the flow rate of the fluid;
wherein the piezoelectric transducers are arranged at an outside of the liner in the at least one through-going opening in the wall of the flow tube, so that ultrasonic signals are transmitted through the liner wall.

2. The ultrasonic flow meter according to claim 1, wherein the liner is provided in a polymeric material.

3. The ultrasonic flow meter according to any of the preceding claims, wherein the stiffness of the flow tube is higher than the stiffness of the liner.

4. The ultrasonic flow meter according to any of the preceding claims, wherein the liner is flat in a contact area with the piezoelectric transducers, so that a front surface of the piezoelectric transducer and the outer surface of the liner are plane parallel in the contact area.

5. The ultrasonic flow meter according to any of the preceding claims, wherein the liner has a curved outer surface and where the piezoelectric transducer is disc-shaped, and wherein an adaptor piece is provided in the area between the outer surface of the liner and the outer surface of the piezoelectric transducer.

6. The ultrasonic flow meter according to any of the preceding claims, wherein an inner surface of the liner is flat in an area covering contact area with the piezoelectric transducers, so that a front surface of the piezoelectric transducer and the inner surface of the liner are plane parallel in the area covering the contact area.

7. The ultrasonic flow meter according to any of the preceding claims, wherein the flow tube is provided with a sealing surface (13) and wherein the liner is extended onto the sealing surface to provide a sealing means (14).

8. The ultrasonic flow meter according to any of the preceding claims, wherein the flow meter further comprises a flow insert comprising two or more reflectors for directed an ultrasonic signal from an emitting piezoelectric transducer to a receiving piezoelectric transducer.

9. The ultrasonic flow meter according to any of the preceding claims, wherein the surface of the liner in a contact area with the piezoelectric transducers is inclined with respect to a centre axis of the flow tube in a manner so that an ultrasonic signal emitted from a first transducer is reflected at an inner surface of the flow tube to be directed towards a second piezoelectric transducer.

10. The ultrasonic flow meter according to any of the preceding claims, wherein the liner is monolithically formed with a house for housing the control circuit for operating the two or more piezoelectric transducers.

11. The ultrasonic flow meter according to any of the preceding claims, wherein the material of the flow tube is selected from the group consisting of: stainless steel, galvanized steel, brass, red brass, polyphenylene sulphide (PPS), polyether sulphone (PES), polyether sulphone (PSU), polystyrene (PS) compound, or polyamide (PA), in particular polyamide 12 (PA12).

12. The ultrasonic flow meter according to any of the preceding claims, wherein the material of the liner is selected from the group consisting of: cross-linked polyethylene (PEX), polyvinyl chloride (PVC), chlorinated polyvinyl chloride (CPVC), polyphenylene sulphide (PPS), polyether sulphone (PES), polyether sulphone (PSU), polystyrene (PS) compound, polyamide (PA), in particular polyamide 12 (PA 12) or rubber.

13. A method of fabricating a flow meter in accordance with any of the preceding claims, the method comprises:
- providing a flow tube (2) with a through-going opening for passage of a fluid between an inlet (3) and an outlet (4), and at least one through-going opening (5) in a wall of the flow tube;
- proving an unbroken liner (6) in the flow tube to cover the entire inner surface of the flow tube, the liner being provided in a water-tight material;
- arranging two or more piezoelectric transducers (7); and
- arranging a control circuit (8) for operating the two or more piezoelectric transducers and to generate a signal or value indicative of the flow rate of the fluid;
wherein the piezoelectric transducers are arranged at an outside of the liner in the at least one through-going opening in the wall of the flow tube, so that ultrasonic signals are transmitted through the liner wall.

14. The method according to claim 13, wherein the liner is provided in the flow tube by insertion through either the inlet (3) or the outlet (4) of the through-going opening for passage of a fluid.

15. The method according to claim 13, wherein the liner is provided by:
- inserting a core element into the through-going opening for passage of a fluid of the flow tube; and
- injection moulding the liner in the space between the core element and the flow tube.

16. The method according to claim 15, wherein the step of injection moulding comprises injection moulding a house for housing the control circuit for operating the two or more piezoelectric transducers, so that the liner and the house for housing the control circuit for operating the two or more piezoelectric transducers are moulded in the same injection step.
